# EUROPÄISCHE PATENTSCHRIFT

(11) **EP 0 396 507 B1**
(45) Veröffentlichungstag und Bekanntmachung des Hinweises auf die Patenterteilung: **29.03.1995**
(21) Anmeldenummer: 90810334.4
(22) Anmeldetag: 01.05.1990
(51) Int. Cl.: G01J 3/12, G01J 3/28

(54) **Monochromator**
Monochromator
Monochromateur

(30) Priorität: 03.05.1989 DD 328186
(43) Veröffentlichungstag der Anmeldung: 07.11.1990
(73) Patentinhaber: CARL ZEISS JENA GmbH, 07745 Jena (DE)
(72) Erfinder: Gärtner, Wolfgang,, 6902 Jena (DD); Schiek, Oswald, 6900 Jena (DD)
(74) Vertreter: Tschudi, Lorenz

(56) Entgegenhaltungen:
- GB-A- 2 013 362
- PATENT ABSTRACTS OF JAPAN, unexamined applications, P field, vol. 6, no. 152, August 12, 1982, The Patent Office Japanese Government, Seite 21 P 134

## Beschreibung

Die Erfindung betrifft einen Monochromator gemäss dem Oberbegriff des Patentanspruches 1, wie er in der Photometrie Anwendung findet.

Zur Einhaltung hoher Stabilitätsforderungen hinsichtlich des Driftverhaltens von Photometern, das von Aenderungen des Lichtstromes der Photometerlampe und Instabilitäten im elektronischen Verarbeitungskreis für das Messsignal bestimmt und beeinträchtigt wird, sind Anordnungen bekannt, mit denen unter Verwendung eines Referenzstrahlenbündels auftretende Drifterscheinungen kompensiert werden.

Optische Anordnungen, bei denen der Referenzempfänger direkt von der Strahlungsquelle beleuchtet wird, haben den Nachteil, dass integral gemessene Schwankungen des von der Strahlungsquelle ausgehenden Lichtstromes nicht linear proportional zu den Schwankungen des aus dem Monochromator austretenden monochromatischen Lichtstromes sind.

Andere bekannte optische Lösungen, bei denen der Referenzlichtstrom durch ein hinter dem Monochromator im monochromatischen Strahlengang angeordnetes strahlenteilendes Element abgeleitet wird, führen zu einem Verlust von Strahlungsleistung des Mess-Strahlenbündels. Aus GB 2013362-A ist es weiterhin bekannt, im Monochromator einen Strahlenteiler in Verbindung mit einem zusätzlichen Empfänger zur Erzeugung einer Referenzstrahlung vorzusehen, was gleichfalls zu Verlusten an Stahlungsleistung und zu die Messung verfälschendem Streulicht führt.

Aus der JP-A-5770415 ist ein Monochromator mit einem Eintrittsspalt, einem abbildenden dispergierenden optischen Element, einem Austrittsspalt sowie Mitteln zur Erzeugung und Weiterführung einer Referenzstrahlung für die Wellenlängenkalibrierung vorbekannt, wobei zur Erzeugung der Referenzstrahlung zusätzlich zum Austrittsspalt ein weiterer Spalt angeordnet ist. Diese Vorrichtung weist den Nachteil auf, dass die Wellenlängen des aus dem Austrittsspalt und dem Referenzspalt austretenden Lichtes zu unterschiedlich sind.

Ziel der Erfindung ist es, die Stabilitätseigenschaften hinsichtlich des Driftverhaltens von Photometern zu verbessern.

Die Aufgabe der Erfindung ist es, eine Referenzstrahlung zu erzeugen, deren Intensität sich bei Intensitätsschwankungen des von der Strahlungsquelle ausgehenden Lichtstromes weitgehend linear proportional zur Intensität der Messstrahlung ändert und der vorliegenden Aufgabe angepasst werden kann, ohne dass Verluste im Mess-Strahlenbündel auftreten.

Erfindungsgemäss wird die Aufgabe durch einen Monochromator gelöst, der aus Eintrittsspalt, abbildendem dispergierenden optischen Element und Austrittsspalt sowie Mitteln zur Erzeugung und Weiterführung einer zum Ausgleich von Intensitätsschwankungen der Strahlungsquelle dienenden Referenzstrahlung besteht, indem dem Austrittsspalt mindestens an einer Seite in Beugungsrichtung ein weiterer Spalt zum Ausblenden einer Referenzwellenlänge in unmittelbarer Nähe der Messwellenlänge des Monochromators benachbart ist.

Durch den unmittelbar neben dem Austrittsspalt angeordneten Spalt tritt eine als Referenzstrahlung benutzte monochromatische Strahlung, deren Wellenlänge sich nur um wenige Nanometer von der Wellenlänge der Messtrahlung unterscheidet. Damit wird erreicht, dass bei Lichtstromschwankungen eine weitgehend lineare Proportionalität zwischen Referenz- und Messstrahlung gewährleistet ist. Durch entsprechende Wahl der Referenzspaltbreite kann die Grösse der Referenzstrahlungsleistung dem vorliegenden Anwendungszweck angepasst werden. Vorteilhaft ist es, wenn dem Austrittsspalt beidseitig in Beugungsrichtung je ein Spalt benachbart ist. Dadurch kann einmal gewährleistet werden, dass die Grenzen des Messbereiches, soweit diese von der Strahlungsleistung bestimmt werden, von der Lage eines Referenzspaltes unabhängig sind. Zum andern kann bei gleichzeitiger Verarbeitung beider Referenzsignale durch Mittelwertbildung eine weitestgehende Verfeinerung der linearen Proportionalität zwischen der Strahlungsleistung der Messstrahlung und der Referenzstrahlung herbeigeführt werden.

Ausführungsbeispiele der Erfindung sollen nachstehend anhand der schematischen Zeichnung näher erläutert werden. Es zeigen:
- **Fig. 1**: einen Monochromator mit einseitig zum Austrittsspalt benachbartem Referenzspalt,
- **Fig. 2**: einen Monochromator mit beidseitig zum Austrittsspalt benachbarten Referenzspalten.

Ein von einer Strahlungsquelle 1 beleuchteter Eintrittsspalt 2 wird mit einem abbildenden Gitter 3 als dispergierendes optisches Element auf einen Austrittsspalt 4 abgebildet. Infolge der Dispersionswirkung des Gitters 3 entsteht bei Anwendung eines Kontinuumstrahlers am Ort des Austrittsspaltes 4 ein kontinuierliches Spektrum, von dem ein ausgeblendeter Teil als monochromatische Messstrahlung dient. Durch einen dicht neben dem Austrittsspalt 4 liegenden Referenzspalt 5, dessen Spaltbreite fest oder veränderbar ist, tritt eine Referenzstrahlung mit einer nur geringfügig von der Messstrahlung abweichenden Wellenlänge aus dem Monochromator. Von hier kann sie direkt oder über abbildende 6 und/oder lichtleitende optische Elemente 7 einem Strahlungsempfänger 8 zugeführt werden, der zusätzlich zu einem Strahlungsempfänger 9 für die Messstrahlung erforderlich ist.

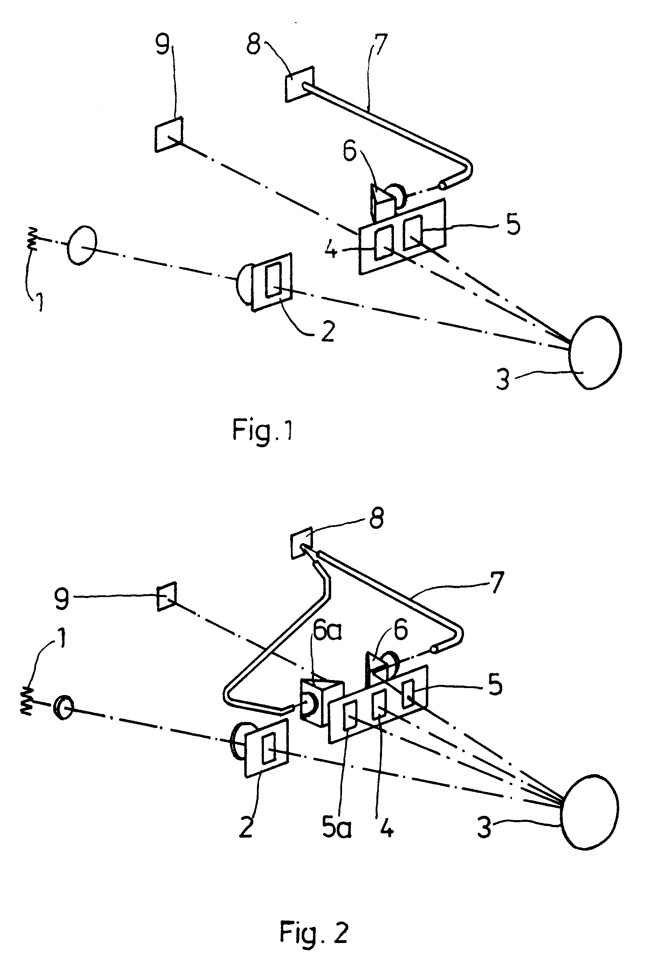

Bei dem in Fig. 2 dargestellten Monochromator ist dem Austrittsspalt 4 ein weiterer Spalt 5a als Referenzspalt benachbart, dem abbildende 6a und/oder lichtleitende Elemente 7a nachgeordnet sind.

Die vorteilhafte Anwendung von nur einem Strahlungsempfänger lässt sich in bekannter Weise realisieren, wenn durch einen zusätzlich angeordneten Chopper und geeigneter Strahlenführung Referenz- und Messtrahlung im Wechsel unterbrochen werden und somit alternierend auf den Strahlungsempfänger treffen.

## Patentansprüche

1. Monochromator mit Eintrittsspalt, abbildendem dispergierenden optischen Element und Austrittsspalt sowie Mitteln zur Erzeugung und Weiterführung einer zum Ausgleich von Intensitätsschwankungen der Strahlungsquelle dienenden Referenzstrahlung, dadurch gekennzeichnet, dass zur Erzeugung der Referenzstrahlung dem Austrittsspalt (4) mindestens an einer Seite in Beugungsrichtung ein weiterer Spalt (5, 5a) zum Ausblenden einer Referenzwellenlänge in unmittelbarer Nähe der Messwellenlänge des Monochromators benachbart ist.

2. Monochromator nach Anspruch 1, dadurch gekennzeichnet, dass dem Austrittsspalt (4) beidseitig in Beugungsrichtung je ein Spalt (5, 5a) benachbart ist.

## Claims

1. Monochromator with entry opening, imaging dispersing optical element and exit opening as well as means for generating and guiding further a reference beam serving to compensate fluctuations in intensity of the radiation source characterized in that to generate the reference beam there is at least on one side in the direction of diffraction a further opening (5, 5a) adjacent to the exit opening (4) to mask a reference wavelength in the immediate vicinity of the measuring wavelength of the monochromator.

2. Monochromator according to claim 1 characterized in that on both sides in the direction of diffraction there is one opening each (5, 5a) adjacent to the exit opening.

## Revendications

1. Monochromateur comprenant une fente d'entrée, un élément optique de projection dispersant, et une fente de sortie ainsi que des moyens d'obtention et de conduite d'un rayon de référence servant pour l'égalisation des variations d'intensité de la source lumineuse, caractérisé en ce que pour la production du rayon de référence sur la fente de sortie (4), au moins une autre fente (5,5a) est disposée sur un côté dans la direction de diffraction, pour diaphragmer une longueur d'onde de référence dans le voisinage proche de la longueur d'onde mesurée du monochromateur.

2. Monochromateur selon la revendication 1, caractérisé en ce que sur la fente de sortie (4), une fente (5,5a) est disposée de chaque côté, dans la direction de diffraction.
